(19) Europäisches Patentamt
European Patent Office
Office européen des brevets

(11) **EP 4 150 960 B1**

(12) **EUROPEAN PATENT SPECIFICATION**

(45) Date of publication and mention
of the grant of the patent:
**30.04.2025 Bulletin 2025/18**

(21) Application number: **21809443.1**

(22) Date of filing: **21.05.2021**

(51) International Patent Classification (IPC):
*H04W 36/36* (2009.01)     *H04W 24/02* (2009.01)

(52) Cooperative Patent Classification (CPC):
**H04W 36/362;** H04W 24/02

(86) International application number:
**PCT/US2021/033596**

(87) International publication number:
**WO 2021/237053 (25.11.2021 Gazette 2021/47)**

(54) **LOGGING INFORMATION RELATED TO MULTIPLE-EVENT CONDITIONAL HANDOVER EXECUTION FOR WIRELESS NETWORKS**

PROTOKOLLIERUNG VON INFORMATIONEN IM ZUSAMMENHANG MIT DER AUSFÜHRUNG BEDINGTER ÜBERGABE MEHRERER EREIGNISSE FÜR DRAHTLOSE NETZWERKE

JOURNALISATION D'INFORMATIONS RELATIVES À UNE EXÉCUTION DE TRANSFERT INTERCELLULAIRE CONDITIONNEL À ÉVÉNEMENTS MULTIPLES POUR DES RÉSEAUX SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.05.2020 US 202063028483 P**

(43) Date of publication of application:
**22.03.2023 Bulletin 2023/12**

(73) Proprietor: **Nokia Technologies Oy 02610 Espoo (FI)**

(72) Inventors:
• **BALAN, Irina**
**81549 Munich (DE)**
• **AWADA, Ahmad**
**81249 Munich (DE)**
• **WALDHAUSER, Richard**
**81249 Munich (DE)**
• **DECARREAU, Guillaume**
**81737 Munich (DE)**
• **VIERING, Ingo**
**81549 Munich (DE)**

(74) Representative: **Nokia EPO representatives Nokia Technologies Oy Karakaari 7 02610 Espoo (FI)**

(56) References cited:
**US-A1- 2016 286 410     US-A1- 2020 045 602**

• **FUTUREWEI: "On CHO execution triggering with two joint events", vol. RAN WG2, no. 20200224 - 20200306, 14 February 2020 (2020-02-14), XP051849032, Retrieved from the Internet <URL:https://ftp.3gpp.org/tsg_ran/WG2_RL2/ TSGR2_109_e/Docs/R2-2000444.zip R2-2000444_On CHO execution triggering with joint events.doc> [retrieved on 20200214]**

**Description**

TECHNICAL FIELD

This description relates to multiple-event conditional handover.

BACKGROUND

A communication system may be a facility that enables communication between two or more nodes or devices, such as fixed or mobile communication devices. Signals can be carried on wired or wireless carriers.

An example of a cellular communication system is an architecture that is being standardized by the 3rd Generation Partnership Project (3GPP). A recent development in this field is often referred to as the long-term evolution (LTE) of the Universal Mobile Telecommunications System (UMTS) radio-access technology. E-UTRA (evolved UMTS Terrestrial Radio Access) is the air interface of 3GPP's Long Term Evolution (LTE) upgrade path for mobile networks. In LTE, base stations or access points (APs), which are referred to as enhanced Node AP (eNBs), provide wireless access within a coverage area or cell. In LTE, mobile devices, or mobile stations are referred to as user equipments (UE). LTE has included a number of improvements or developments. Aspects of LTE are also continuing to improve.

5G New Radio (NR) development is part of a continued mobile broadband evolution process to meet the requirements of 5G, similar to earlier evolution of 3G & 4G wireless networks. 5G is also targeted at the new emerging use cases in addition to mobile broadband. A goal of 5G is to provide significant improvement in wireless performance, which may include new levels of data rate, latency, reliability, and security. 5G NR may also scale to efficiently connect the massive Internet of Things (IoT) and may offer new types of mission-critical services. For example, ultra-reliable and low-latency communications (URLLC) devices may require high reliability and very low latency. US 20200045602 discloses cell handover. When receiving a preset handover command transmitted by a base station, a handover decision parameter corresponding to each target cell is determined. When determining a target cell that meets a handover condition based on the handover decision parameter corresponding to each target cell , a preset timer is started , and a cell handover operation from a current serving cell to the target cell that meets the handover condition is executed. First handover information is recorded in a radio link failure report, when unsuccessfully executing the cell handover operation .Futurewei, discusses in "On CHO execution triggering with two joint events", 3GPP TSG-RAN WG2 Meeting #109e, CHO execution triggered by multiple joint events.

SUMMARY

The invention is defined in the appended set of claims.

The details of one or more examples of embodiments are set forth in the accompanying drawings and the description below. Other features will be apparent from the description and drawings, and from the claims.

BRIEF DESCRIPTION OF THE DRAWINGS

FIG. 1 is a block diagram of a wireless network according to an example embodiment.
FIG. 2 is a flow chart illustrating operation of a user device (UE) according to an example embodiment.
FIG. 3 is a flow chart illustrating operation of a network node (e.g., BS or gNB) according to an example embodiment.
FIG. 4 is a diagram illustrating a multiple-event conditional handover (CHO) according to an example embodiment.
FIG. 5 is a diagram illustrating a dual-event conditional handover (CHO) execution according to an example embodiment.
FIG. 6 is a block diagram of a wireless station or wireless node (e.g., AP, BS, gNB, RAN node, relay node, UE or user device, or other node) according to an example embodiment.

DETAILED DESCRIPTION

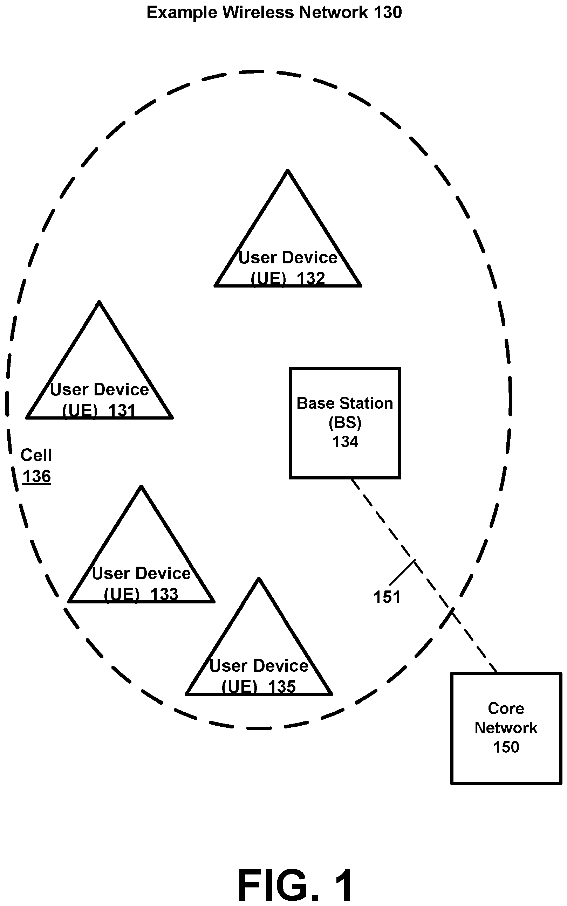

FIG. 1 is a block diagram of a wireless network 130 according to an example embodiment. In the wireless network 130 of FIG. 1, user devices 131, 132, 133 and 135, which may also be referred to as mobile stations (MSs) or user equipment (UEs), may be connected (and in communication) with a base station (BS) 134, which may also be referred to as an access point (AP), an enhanced Node B (eNB), a BS, next generation Node B (gNB), a next generation enhanced Node B (ng-eNB), or a network node. The terms user device and user equipment (UE) may be used interchangeably. A BS may also include or may be referred to as a RAN (radio access network) node, and may include a portion of a BS or a portion of a RAN node, such as (e.g., such as a centralized unit (CU) and/or a distributed unit (DU) in the case of a split BS). At least part of the functionalities of a BS (e.g., access point (AP), base station (BS) or (e)Node B (eNB), BS, RAN node) may also be carried out by any node, server or host which may be operably coupled to a transceiver, such as a remote radio head. BS (or AP) 134 provides wireless coverage within a cell 136, including to user devices (or UEs) 131, 132, 133 and 135. Although only four user devices (or UEs) are shown as being connected or attached to BS 134, any number of user devices may be provided. BS 134 is also connected to a core network 150 via a S1 interface or NG interface 151. This is merely one simple example of a wireless network, and others may be used.

A base station (e.g., such as BS 134) is an example of a radio access network (RAN) node within a wireless network. A BS (or a RAN node) may be or may include (or may alternatively be referred to as), e.g., an access point (AP), a gNB, an eNB, or portion thereof (such as a centralized unit (CU) and/or a distributed unit (DU) in the case of a split BS or split gNB), or other network node.

According to an illustrative example, a BS node (e.g., BS, eNB, gNB, CU/DU, ...) or a radio access network (RAN) may be part of a mobile telecommunication system. A RAN (radio access network) may include one or more BSs or RAN nodes that implement a radio access technology, e.g., to allow one or more UEs to have access to a network or core network. Thus, for example, the RAN (RAN nodes, such as BSs or gNBs) may reside between one or more user devices or UEs and a core network. According to an example embodiment, each RAN node (e.g., BS, eNB, gNB, CU/DU, ...) or BS may provide one or more wireless communication services for one or more UEs or user devices, e.g., to allow the UEs to have wireless access to a network, via the RAN node. Each RAN node or BS may perform or provide wireless communication services, e.g., such as allowing UEs or user devices to establish a wireless connection to the RAN node, and sending data to and/or receiving data from one or more of the UEs. For example, after establishing a connection to a UE, a RAN node (e.g., BS, eNB, gNB, CU/DU, ...) may forward data to the UE that is received from a network or the core network, and/or forward data received from the UE to the network or core network. RAN nodes (e.g., BS, eNB, gNB, CU/DU, ...) may perform a wide variety of other wireless functions or services, e.g., such as broadcasting control information (e.g., such as system information) to UEs, paging UEs when there is data to be delivered to the UE, assisting in handover of a UE between cells, scheduling of resources for uplink data transmission from the UE(s) and downlink data transmission to UE(s), sending control information to configure one or more UEs, and the like. These are a few examples of one or more functions that a RAN node or BS may perform. A base station may also be DU (Distributed Unit) part of IAB (Integrated Access and Backhaul) node (a.k.a. a relay node). DU facilitates the access link connection(s) for an IAB node.

A user device (user terminal, user equipment (UE), mobile terminal, handheld wireless device, etc.) may refer to a portable computing device that includes wireless mobile communication devices operating either with or without a subscriber identification module (SIM), including, but not limited to, the following types of devices: a mobile station (MS), a mobile phone, a cell phone, a smartphone, a personal digital assistant (PDA), a handset, a device using a wireless modem (alarm or measurement device, etc.), a laptop and/or touch screen computer, a tablet, a phablet, a game console, a notebook, a vehicle, a sensor, and a multimedia device, as examples, or any other wireless device. It should be appreciated that a user device may also be (or may include) a nearly exclusive uplink only device, of which an example is a camera or video camera loading images or video clips to a network. A user device may be also MT (Mobile Termination) part of IAB (Integrated Access and Backhaul) node (a.k.a. a relay node). MT facilitates the backhaul connection for an IAB node.

In LTE (as an illustrative example), core network 150 may be referred to as Evolved Packet Core (EPC), which may include a mobility management entity (MME) which may handle or assist with mobility/handover of user devices between BSs, one or more gateways that may forward data and control signals between the BSs and packet data networks or the Internet, and other control functions or blocks. Other types of wireless networks, such as 5G (which may be referred to as New Radio (NR)) may also include a core network.

In addition, by way of illustrative example, the various example embodiments or techniques described herein may be applied to various types of user devices or data service types, or may apply to user devices that may have multiple applications running thereon that may be of different data service types. New Radio (5G) development may support a number of different applications or a number of different data service types, such as for example: machine type communications (MTC), enhanced machine type communication (eMTC), Internet of Things (IoT), and/or narrowband IoT user devices, enhanced mobile broadband (eMBB), and ultra-reliable and low-latency communications (URLLC). Many of these new 5G (NR) - related applications may require generally higher performance than previous wireless networks.

IoT may refer to an ever-growing group of objects that may have Internet or network connectivity, so that these objects may send information to and receive information from other network devices. For example, many sensor type applications or devices may monitor a physical condition or a status, and may send a report to a server or other network device, e.g., when an event occurs. Machine Type Communications (MTC, or Machine to Machine communications) may, for example, be characterized by fully automatic data generation, exchange, processing and actuation among intelligent machines, with or without intervention of humans. Enhanced mobile broadband (eMBB) may support much higher data rates than currently available in LTE.

Ultra-reliable and low-latency communications (URLLC) is a new data service type, or new usage scenario, which may be supported for New Radio (5G) systems. This enables emerging new applications and services, such as industrial automations, autonomous driving, vehicular safety, e-health services, and so on. 3GPP targets in providing connectivity with reliability corresponding to block error rate (BLER) of $10^{-5}$ and up to 1 ms U-Plane (user/data plane) latency, by way of illustrative example. Thus, for example, URLLC user devices/UEs may require a significantly lower block error rate than other types of user devices/UEs as well as low latency (with or without requirement for simultaneous high reliability). Thus, for example, a URLLC UE (or URLLC application on a UE) may require much shorter latency, as compared to a eMBB UE (or an eMBB application running on a UE).

The various example embodiments may be applied to a wide variety of wireless technologies or wireless networks, such as LTE, LTE-A, 5G (New Radio (NR)), cmWave, and/or mmWave band networks, IoT, MTC, eMTC, eMBB, URLLC, etc., or any other wireless network or wireless technology. These example networks, technologies or data service types are provided only as illustrative examples.

A handover of a user equipment (UE) may refer to a process in which a connected call or a data session for the UE is transferred from one cell (or base station) to another cell (or base station) without disconnecting the session. In some wireless technologies, such as 5G/New Radio (NR), operating at higher frequencies may create additional mobility challenges since higher diffraction losses at these higher frequencies can lead to rapid signal degradation caused by obstacles. Thus, it is desirable to provide reliable and efficient handovers to ensure UE mobility.

According to example embodiments, conditional handover (CHO) may be used to increase the mobility robustness. In an example CHO, CHO handover preparation and CHO handover execution may be separated. For example, in an example CHO procedure, a handover of the UE to a target cell may be prepared before-hand by a serving cell, and then the handover of the UE from the source cell to the target cell may be performed later when the radio link between the UE and the target cell is sufficient or meets a CHO execution condition. Thus, a CHO may allow the serving BS/gNB (associated with or providing the source cell that is currently serving the UE) to prepare multiple possible target cells, and then a handover may later be performed for the UE to one of the target cells. An advantage of CHO is that a handover (HO) command may be sent by a source cell (or source/serving BS/network node) to the UE in advance, while the radio link between the UE and source cell is still good, and then the UE may later perform CHO execution if the CHO execution condition is fulfilled. As noted, after a target cell has been prepared by the source cell for a possible handover, the source cell (serving BS/network node) may send a handover (HO) command to the UE, providing a target cell configuration (e.g., including an indication of random access/RACH resources in the target cell for the UE), and an event configuration (including one or more parameters of the event) to be used for performing CHO execution. The UE may perform CHO execution if a CHO execution condition is fulfilled. CHO execution condition is typically based on one or more events. For example, using a single event, a UE may perform (trigger) CHO execution to a target cell if an entering condition of the event is fulfilled for at least a Time-To-Trigger time period.

The UE may receive, from the source cell or source/serving network node (gNB/BS), a configuration of the conditional handover (CHO) execution condition for the target cell, which may include one or more parameters that may define or may be used by the UE to determine the CHO execution condition. For example, the configuration of the CHO execution condition may include an event configuration, including one or more parameters of the event that may define an entering condition or a leaving condition of the event. In a single event CHO, a CHO execution condition may be fulfilled or satisfied if the entering condition for the event is fulfilled for a minimum time period referred to as Time-to-Trigger (TTT)). For example, the UE may, from time to time, perform signal measurements of signals received from the source cell, and one or more neighbour (or potential target) cells. The measurements by the UE may include, measuring a reference signal receive power (RSRP), a reference signal received quality (RSRQ), or other signal measurement. For example, for an A3 event, the CHO execution condition may indicate that the target cell measurement should be better (e.g., greater than) the source cell measurement by more than an indicated threshold or offset(s). For example, the CHO execution condition may be configured (or indicated to the UE) by the source node (source BS/gNB) in the reconfiguration message (e.g., in a radio resource control (RRC) Reconfiguration message, or handover command) that may be sent by the source BS (source node) to the UE.

As an illustrative example, an example of an A3 event may be configured as an example event for a CHO execution condition. For instance, CHO execution for the UE may be triggered if the entering condition (indicated by Eqn. 1) for event A3 is fulfilled for a certain Time-to-Trigger (TTT), where TTT may refer to a minimum time period that the entering condition of the event must be fulfilled or met to trigger or cause the CHO execution of the UE from the source cell to the target cell:

$$Mn + Ofn + Ocn - Hys > Mp + Ofp + Ocp + Off \quad \text{(Eqn. 1)}$$

where Mn is the measurement of the neighboring target cell of handover, Mp is the measurement of the serving cell, Ocn is the cell individual offset (CIO). The parameters Ofn, Ofp, Ocp, Off and Hys are other offsets that may be configured by the network (and which may be indicated in the configuration of conditional handover execution condition). The CIO (shown as Ocn in Eqn. 1) may be an offset that may be applied specifically to a neighbor cell measurements (and may be specific to this target/neighbor cell), to make such neighbor cell measurements more attractive for a UE handover (e.g., via a positive CIO), or less attractive for a UE handover (e.g., via a negative CIO).

A leaving condition for an A3 event may be defined by Eqn. 2 as:

$$Mn + Ofn + Ocn + Hys > Mp + Ofp + Ocp + Off \quad \text{(Eqn. 2)}$$

The A3 event is an example of a single threshold event, or a non-dual threshold event, since the entering condition of event A3 employs a single threshold. Thus, for an A3 event, the entering condition requires the target (or neighbour) cell measurement becomes at least a threshold better than the source cell measurement.

Another example event, event A5, is an example of a dual-threshold event, since an A5 event may employ two thresholds to determine if an entering condition (or a leaving condition) is fulfilled for the event. For an A5 event (equation not shown), the entering condition requires that the source cell measurement is worse (e.g., less) than a first threshold, and the target cell is better (e.g., stronger or greater) than a second threshold. The A3 and A5 events are example events, and other events may be used for CHO execution.

In addition, in order to improve the reliability and/or performance of UE CHO execution, the CHO execution may be based on multiple events (e.g., dual-event CHO execution). Also, the multiple events may be based on measurement of different signal parameters, such as reference signal received power (RSRP) or a reference signal received quality (RSRQ). Thus, a multiple-event conditional handover may use different events (e.g., A3 event + A5 event), or may measure different signal parameters based on same or different events, such as: A3 event based on RSRP + A3 event based on RSRQ; or, A3 event based on RSRP + A5 event based on RSRQ; or A3 event based on RSRQ + R5 event based on RSRP, etc.

A UE may receive, e.g., from a source cell or serving network node, a multiple-event CHO configuration, e.g., with the handover command, which may include one or more of: a target cell configuration (e.g., indicating random access/RACH resources for the UE), a CHO execution condition, an event configuration for event of multiple events (e.g., where an event configuration of an event may include or identify one or more of an event (e.g., A3 or A5 event), a signal parameter to be measured (e.g., RSRP or RSRQ), one or more offsets, a hysteresis for the entering condition of the event, and/or a TTT value for the event). Thus, each event may include its own event configuration, which may specify one or more parameters for the event, such as, e.g., one or more of an event type (e.g., A3 event, or A5 event), a signal parameter to be measured (e.g., either RSRP or RSRQ), an offset for entering condition, a TTT value, etc.

A multiple-event CHO execution condition, which may be known by the UE in advance or may be signalled to the UE e.g., as part of the multiple-event CHO configuration, may indicate a status or condition of each event of the multiple events, or a relationship between the events, that needs to occur in order for the CHO execution condition to be fulfilled for the multiple-event CHO execution (and thus trigger CHO execution). For example, for a dual-event CHO execution that is based on two events (a first event, and a second event), the UE may jointly evaluate (where UE evaluates aspects of both events, e.g., even sometimes evaluating aspects of both events at the same time in some cases) both the first event and the second event to determine if the following multiple-event CHO execution condition has been fulfilled: multiple-event CHO execution is performed by the UE if a first event, having a Time-To-Trigger (TTT) timer that has already expired, does not fulfill a leaving condition for the first event when a Time-To-Trigger (TTT) timer for the second event expires. This is an example of a multiple-event CHO execution condition, and others may be used.

In some cases, a CHO may be unsuccessful, e.g., resulting in a radio link failure (RLF) or a handover (HO) failure of the UE. A HO failure my occur when a UE is unsuccessful in performing random access to the target cell. In a radio resource control (RRC) connected mode (e.g., RRC_CONNECTED mode), a UE may typically monitor a serving cell radio link, referred to as radio link monitoring (RLM) and performs RLM measurements. The RLM measurements assist with evaluating serving cell radio link quality to determine whether downlink (DL) radio link quality is good enough (e.g., sufficient) to maintain the radio link and/or to indicate to the higher layers when the quality of the radio link is below a defined threshold (e.g., when it is expected that the radio link can no longer provide good enough quality for data transmission). RLM may include a process by which a UE or user device may monitor a radio link between the UE and a serving gNB or serving cell, in order to detect or declare a Radio Link Failure under certain circumstances.

In the case of a single event CHO, a UE may collect and/or store information just before RLF or HO failure, which may be reported to the network. However, this collected information is for single-event CHO execution, and is very limited in scope. There is a need to provide much more detailed information related to multiple-event CHO execution, e.g., which may allow the UE to determine which event may have been responsible for the RLF or HO failure, and allow the UE to determine how parameters may be adjusted to improve CHO execution performance.

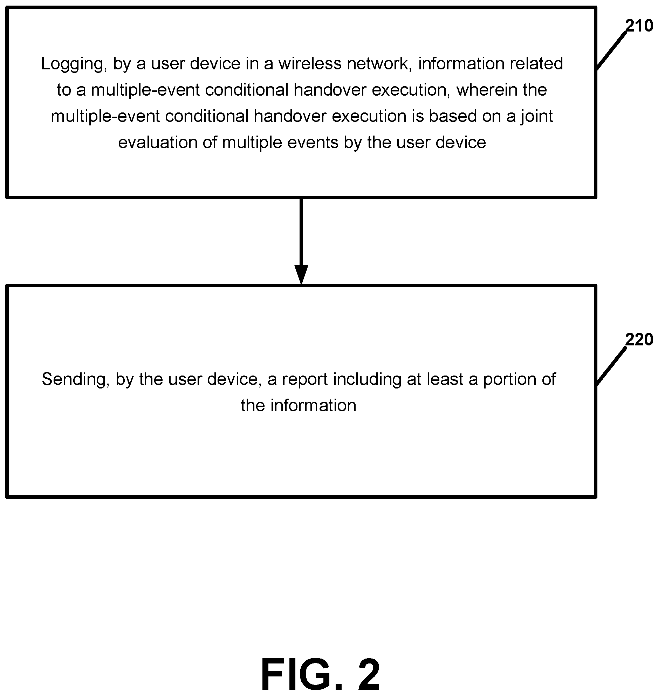

FIG. 2 is a flow chart illustrating operation of a user device (UE) according to an example embodiment. Operation 210 includes logging, by a user device (UE) in a wireless network, information related to a multiple-event conditional handover execution, wherein the multiple-event conditional handover execution is based on a joint evaluation of multiple events by the user device. Logging may include creating or keeping a log or record. Logging may include, for example, creating a log or record that may record (or store) information related to events or event-related conditions for a user device or UE with respect to a conditional handover execution. For example, logging information related to a multiple-event conditional handover execution may include logging or storing a wide variety of event-related conditions, for example. Event-related conditions may include, for example one or more of, e.g., a status of a Time-To-Trigger timer for an event, including a status of either not started, started, stopped after being started, or expired; an event fulfilling an entering condition for the event; an event fulfilling a leaving condition for the event; an occurrence of a handover failure for the user device; or fulfillment, or not, of an execution condition for the multiple-event conditional handover execution. For example, logging may include, logging of an occurrence of an event-related condition, a time of occurrence of an event-related condition, a number of occurrences of an event-related condition, or a relationship (e.g., order or timing) between occurrences of event-related conditions for different events (e.g., which event had a specific event-related condition occur first), etc., or other information related to the events of the multiple-event CHO execution.

The multiple-event conditional handover execution may be based on a joint evaluation of multiple events by the user device, e.g., which may include the UE/user device evaluating information related to (e.g., such as one or more condition-related events) of both events at various points in time (e.g., which may include evaluating condition-related events of both events at the same time or simultaneously) to determine if the multiple-event CHO execution condition has been fulfilled or not. If the multiple-event CHO execution condition has been met or fulfilled, then the UE may (or will typically) perform CHO execution to the target cell.

Also, with respect to FIG. 2, operation 220 includes sending, by the user device or UE, a report including at least a portion of the information. Thus, the report may include at least a portion of the information that was logged by the UE. The report (e.g., which may include the logged information) may be sent by the UE to a network node or the network, e.g., after detection of a RLF or HO failure (after the UE re-establishes a connection), or in response to a request from a network node (BS, gNB). For example, by logging and then sending a more detailed log of information related to a multiple-event CHO execution, this may allow the network, the source network node (e.g., source BS/gNB), or other network node or network, to modify one or more parameters associated with a configuration of a CHO execution condition and/or modify one or more parameters of one or more events of a multiple-event CHO execution, e.g., in order to improve reliability and performance of CHO execution. In an example, the multiple-event conditional handover execution may include a dual-event (two-event) conditional handover execution that is based on a joint evaluation of two events.

With respect to FIG. 2, the sending may include: sending, by the user device, a report that includes at least a portion of the information, after the user device re-establishes a connection to a cell after a handover failure or radio link failure has occurred for the user device.

With respect to the method of FIG. 2, the sending may include sending, by the user device in response to a radio link failure or handover failure, a report that includes at least a portion of the information; or sending, by the user device in response to a request from a network node, a report that includes at least a portion of the information.

With respect to the method of FIG. 2, the multiple-event conditional handover execution may be based on a plurality of events; wherein the logging may include at least logging of an occurrence of an event-related condition, a number of occurrences of an event-related condition, or a time or timing of an occurrence of an event-related condition for one or more events of the plurality of events.

With respect to the method of FIG. 2, an event-related condition may include at least one of the following: a status of a Time-To-Trigger timer for an event, including a status of either not started, started, stopped after being started, or expired; an event fulfilling an entering condition for the event; an event fulfilling a leaving condition for the event; an occurrence of a handover failure for the user device; or fulfillment, or not, of an execution condition for the multiple-event conditional handover execution.

With respect to the method of FIG. 2, the logging may include at least one of the following: logging information indicating whether an event-related condition has occurred for one or more of the plurality of events; logging information indicating a number of times that an event-related condition has occurred for one or more of the plurality of events; logging a time relationship of, or a time difference between, event-related conditions of at least two events of the plurality of events; logging information indicating a time that an event-related condition has occurred for one or more of the plurality of events; logging information indicating for which event an event-related condition occurred first; or logging a number of failures of handover for the user device due to the plurality of events not fulfilling an execution condition for the multiple-event conditional handover execution.

Also, the logging may include logging information indicating whether an event-related condition has occurred for one or more of the plurality of events, e.g., including one or more of: logging information indicating which event, if any, has fulfilled an entering condition for the event, and started a Time-To-Trigger timer; logging information indicating which event, if any, has fulfilled an entering condition for the event, started a Time-To-Trigger timer, and the Time-To-Trigger timer for the event expired; logging information indicating fulfillment, or not, of an execution condition for the multiple-event conditional handover execution based on a joint evaluation of multiple events by the user device; logging information indicating whether or not a first event, having a Time-To-Trigger timer that has already expired, fulfills a leaving condition for the first event when a Time-To-Trigger timer for the second event expires; or logging information indicating which event, if any, fulfilled an entering condition for the event, started its Time-To-Trigger timer, and the Time-To-Trigger timer for the event was stopped before expiring.

With respect to the method of FIG. 2, the logging may include logging information indicating a number of times that an event-related condition has occurred for one or more of the plurality of events, which may include, e.g., logging information indicating how many times each event, if any, started its Time-To-Trigger timer, and the Time-To-Trigger timer for the event was stopped before expiring.

With respect to the method of FIG. 2, the logging may include at least logging of information indicating a relationship of a first event-related condition for the first event with respect to a second event-related condition for the second event, which may include at least one of: an order of the first event-related condition for the first event and the second event-related condition of the second event; a time between an occurrence of the first event-related condition for the first event and an occurrence of the second event-related condition of the second event; or a time of an occurrence of the first event-related condition for the first event and a time of an occurrence of the second event-related condition of the second event.

With respect to the method of FIG. 2, the logging of information indicating a relationship may include at least one of logging whether a first event or a second event fulfilled an entering condition first; logging values of Time-To-Trigger timers of the first event and the second event when one of the Time-To-Trigger timers was stopped or expired; or logging a time or time period when Time-To-Trigger timers of the first event and the second event were running in parallel.

With respect to the method of FIG. 2, the logging may include logging information indicating a time that an event-related condition has occurred for one or more of the plurality of events, e.g., including at least one of: logging information indicating a time when a Time-To-Trigger timer for an event was started; logging information indicating a time when a Time-To-Trigger timer for an event expired; logging information indicating a time when a Time-To-Trigger timer for an event stopped; or logging information indicating a time when a Time-To-Trigger timer for a first event was running in parallel with a Time-To-Trigger timer for a second event.

With respect to the method of FIG. 2, the logging may include logging information indicating for which event an event-related condition occurred first, e.g., which may include at least one of: logging information indicating which event, if any, fulfilled an entering condition for the event and started a Time-To-Trigger timer first; logging information indicating which event, if any, had a Time-To-Trigger timer expire first; or, logging information indicating which event, if any, fulfilled an entering condition for the event, started a Time-To-Trigger timer, and then stopped the Time-To-Trigger timer first.

With respect to the method of FIG. 2, the information logged may include a number of failures (e.g., HO failures and/or RLFs), which may be counted or tracked by various counters. Thus, for example, the logging may include logging a failure counter that counts a number of failures of conditional handovers of the user device due to the plurality of events not fulfilling an execution condition for the multiple-event conditional handover execution. This may include: logging one or more of the following information for a case where both the first event and the second event are non-dual-threshold measurement events: a number of conditional handover failures when a Time-To-Trigger timer for the first event did not expire; or a number of conditional handover failures when a Time-To-Trigger timer for the second event did not expire.

Logging a failure counter may include logging one or more of the following information for a case where both the first event and the second event are dual-threshold measurement events: a number of conditional handover failures when a Time-To-Trigger timer for the first event did not expire because a source cell measurement was not less than a first threshold; a number of conditional handover failures when a Time-To-Trigger timer for the second event did not expire because a target cell measurement was not greater than a second threshold; a number of conditional handover failures when a Time-To-Trigger timer for the second event did not expire because a source cell measurement was not less than a first threshold; or a number of conditional handover failures when a Time-To-Trigger timer for the first event did not expire because a target cell measurement was not greater than a second threshold.

Or, logging a failure counter may include logging a number of conditional handover failures based on a Time-To-Trigger timer for the first the first event expired and then the Time-To-Trigger timer for second event expired, but a leaving condition for the first event was fulfilled when the Time-To-Trigger timer for the second event expired.

With respect to FIG. 2, the logging may include one or more of, e.g.: logging of a configuration of a first event and/or a configuration of a second event; logging information indicating which event, if any, has fulfilled an entering condition for the event, and started a Time-To-Trigger timer; logging information indicating which event, if any, has fulfilled an entering condition for the event, started a Time-To-Trigger timer, and the Time-To-Trigger timer for the event expired; logging information indicating fulfillment, or not, of an execution condition for the multiple-event conditional handover execution; logging information indicating whether or not a first event, having a Time-To-Trigger timer that has already expired, fulfills a leaving condition for the first event when a Time-To-Trigger timer for the second event expires; logging information indicating which event, if any, started its Time-To-Trigger timer, and the Time-To-Trigger timer for the event was stopped before expiring; logging information indicating how many times each event, if any, started its Time-To-Trigger timer, and the Time-To-Trigger timer for the event was stopped before expiring; logging whether a first event or a second event fulfilled an entering condition first; logging values of Time-To-Trigger timers of the first event and the second event when one of the Time-To-Trigger timers was stopped or expired; logging a time or time period when Time-To-Trigger timers of the first event and the second event were running in parallel; logging information indicating a time when a Time-To-Trigger timer for an event was started; logging information indicating a time when a Time-To-Trigger timer for an event expired; logging information indicating a time when a Time-To-Trigger timer for an event stopped; logging information indicating a time when a Time-To-Trigger timer for a first event was running in parallel with a Time-To-Trigger timer for a second event; logging information indicating which event, if any, fulfilled an entering condition for the event and started a Time-To-Trigger timer first; logging information indicating which event, if any, had a Time-To-Trigger timer expire first; logging information indicating which event, if any, fulfilled an entering condition for the event, started a Time-To-Trigger timer, and then stopped the Time-To-Trigger timer first; or logging a failure counter that counts a number of failures of conditional handovers of the user device due to the plurality of events not fulfilling an execution condition for the multiple-event conditional handover execution.

With respect to the method of FIG. 2, the method may further include receiving, by the user device from a network node, a handover command, as part of a conditional handover, including a configuration of each of multiple events, including for at least a configuration of a first event and a configuration for a second event, and a joint evaluation configuration that configures a joint evaluation of the multiple events by the user device to determine whether or not to perform a conditional handover execution.

With respect to the method of FIG. 2, the method may further include jointly evaluating, by the user device, the plurality of events to determine whether or not to perform a conditional handover execution of the user device from a source network node to a target network node.

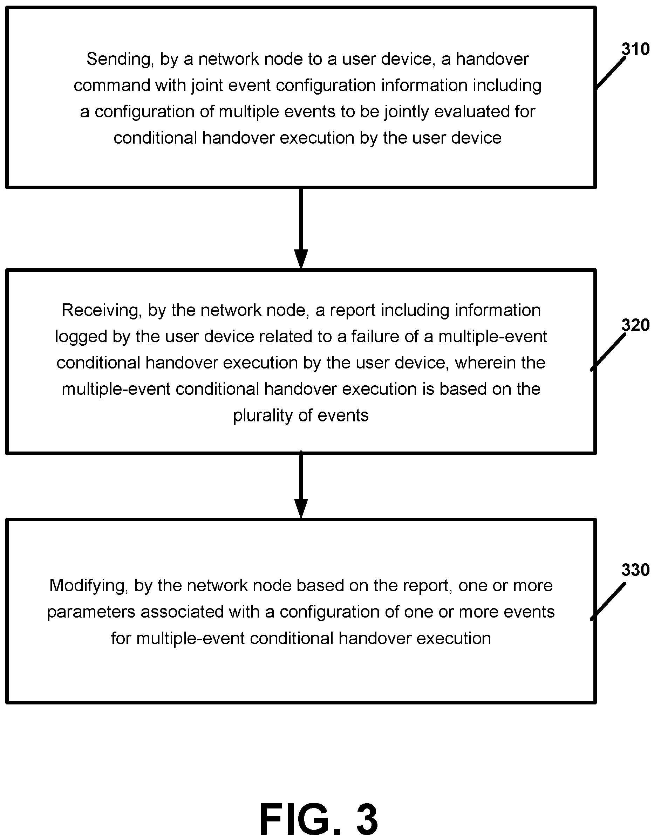

FIG. 3 is a flow chart illustrating operation of a network node (e.g., BS, gNB or other network node) according to an example embodiment. Operation 310 includes sending, by a network node to a user device, a handover command with joint event configuration information including a configuration of multiple events to be jointly evaluated for conditional handover execution by the user device. Operation 320 includes receiving, by the network node, a report including information logged by the user device related to a failure of a multiple-event conditional handover execution by the user device, wherein the multiple-event conditional handover execution is based on the plurality of events. And, operation 330 includes modifying, by the network node based on the report, one or more parameters associated with a configuration of one or more events for multiple-event conditional handover execution.

With respect to the method of FIG. 3, the joint event configuration information comprises a joint evaluation configuration that configures a joint evaluation of the multiple events by the user device to determine whether or not to perform a conditional handover execution. A joint event configuration information may include information describing a CHO execution condition, a configuration of each of multiple events, etc.

With respect to the method of FIG. 3, the information logged by the user device may include at least one of an occurrence of an event-related condition, a number of occurrences of an event-related condition, or a time or timing of an occurrence of an event-related condition for one or more events of the plurality of events. As noted, an event-related condition may include, e.g., at least one of: a status of a Time-To-Trigger timer for an event, including a status of either not started, started, stopped after being started, or expired; an event fulfilling an entering condition for the event; an event fulfilling a leaving condition for the event; an occurrence of a handover failure for the user device; or fulfillment, or not, of an execution condition for the multiple-event conditional handover execution.

With respect to the method of FIG. 3, the information logged by the user device may include at least one of the following: information indicating whether an event-related condition has occurred for one or more of the plurality of events; information indicating a number of times that an event-related condition has occurred for one or more of the plurality of events; a time relationship of, or a time difference between, event-related conditions of at least two events of the plurality of events; information indicating a time that an event-related condition has occurred for one or more of the plurality of events; information indicating for which event an event-related condition occurred first; or, a number of failures of handover for the user device due to the plurality of events not fulfilling an execution condition for the multiple-event conditional handover execution.

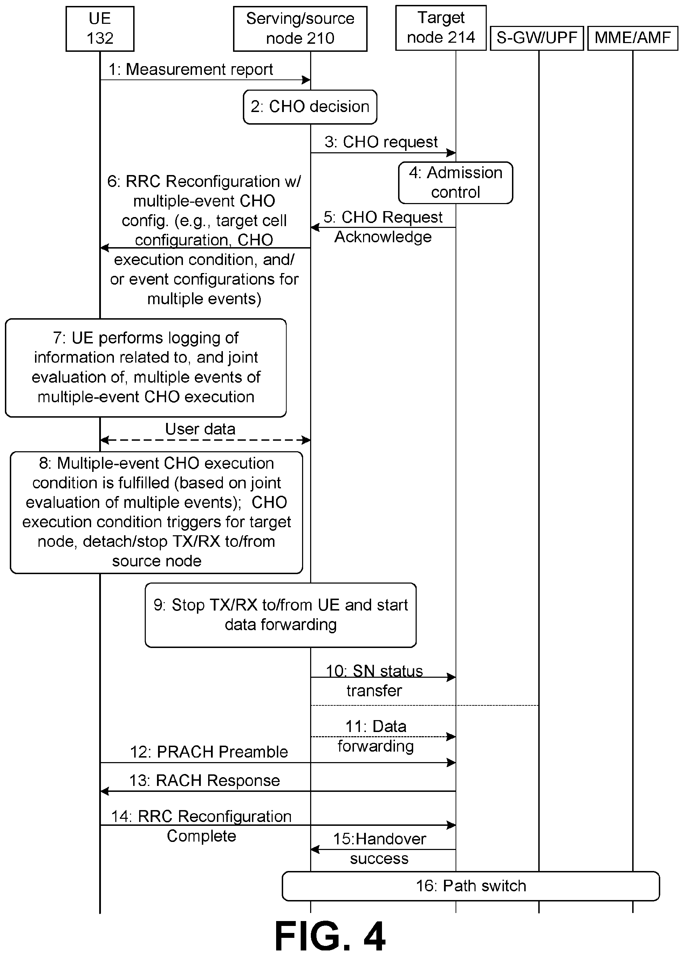

FIG. 4 is a diagram illustrating a multiple-event conditional handover (CHO) according to an example embodiment. As shown in FIG. 4, a UE 132, a serving node 210 (e.g., serving BS) that is associated with a source cell, and a target node 214 associated with a target cell are shown. Also, core network entities are also shown, e.g., including a serving gateway/user plane function (S-GW/UPF), and a Mobility Management Entity/Access and Mobility Management Function (MME/AMF) function are shown. Operations 1-16 are shown in the diagram of FIG. 4. For example, operations 1-6 may be associated with CHO preparation, and operations 7-16 may be associated with CHO execution. At 1, a measurement report(s) is sent to the serving node 210, e.g., indicating RSRP (or other signal measurements) for the source cell and one or more target cells, e.g., to allow the serving node 210 to determine one or more possible target cells for possible handover for the UE.

At 2 of FIG. 4, the serving node 210 may make a CHO decision, e.g., to perform a conditional handover of the UE to one or more (possible) target cells. At 3, a CHO request is sent to a target node 214 that is associated with the target cell. Although not shown CHO requests may be sent to other target nodes. At 4, target node 214 performs admission control to make a decision to accept the requested handover of the UE 132. At 5, the target node 214 sends a CHO request acknowledge, accepting or acknowledging the requested CHO for UE 132 to the target cell, and providing a target cell configuration for the target cell.

At 6 of FIG. 4, the UE receives a reconfiguration message (e.g., a RRC reconfiguration), with handover (HO) command. The RRC message may also include, e.g., a multiple-event CHO configuration, which may include one or more of: a target cell configuration (e.g., including target resources for random access preamble transmission/RACH), an indication of a multiple-event CHO execution condition (e.g., which may indicate what specific conditions or even-related conditions, for the multiple events, should be present or have occurred, to trigger the CHO execution to target cell), and event configurations for the multiple events. For example, an event configuration may include one or more parameters of an entering condition of the event (e.g., thresholds, hyst, CIO, Off or offset, or other parameters of the entering condition of the event, a TTT value). An indication of a multiple-event CHO execution condition may include a field or parameter that may indicate a specific multiple-event CHO execution condition, among multiple possible CHO execution conditions, for example. For example, for a dual-event CHO execution that is based on two events (a first event, and a second event), an example may include: multiple-event CHO execution is performed by the UE if a first event, having a Time-To-Trigger (TTT) timer that has already expired, does not fulfill a leaving condition for the first event when a Time-To-Trigger (TTT) timer for the second event expires. This is an example of a multiple-event CHO execution condition, and others may be used. In some cases, the multiple-event CHO execution condition may be preconfigured or known in advance by the UE.

At 7 of FIG. 4, performs logging of information related to the multiple-event CHO execution, and may perform joint evaluation (e.g., evaluation of multiple events, or simultaneous evaluation of various event-related conditions of the multiple events, at various points in time) of the multiple events to determine if the CHO execution condition has been fulfilled.

At 8 of FIG. 4, the UE determines that the multiple-event CHO execution condition is fulfilled (e.g., based on joint evaluation of the multiple events, which triggers CHO execution to the target cell/target node, and the UE 132 detachment from source node and stopping transmitting and receiving to/from the source node.

If, during the CHO execution, a failure (e.g., RLF or HO failure) occurs, then the UE may (e.g., after reconnected to a cell) may send a report to a network node that may include all or a portion of the logged information related to the multiple-event CHO execution. Or, the report, including all or part of logged information related to multiple-event CHO execution, may be sent to a network node upon request. The report, including the logged information related to the (e.g., failed) multiple-event CHO execution, may be forwarded, e.g., to the source node, to allow the network and/or the source node to perform mobility robustness optimization (MRO), e.g., where the source node or network may determine which event was (or may likely have been) the cause of the failure, and then determine one or more parameters or functions related to multiple-event CHO execution that should be adjusted (e.g., adjusting a TTT or an offset for an event that may have caused the failure) in order to improve reliability and/or operation of the multiple-event CHO execution.

The remaining operations 9-16 in FIG. 4 are part of the CHO execution, assuming there is no failure (e.g., assuming no RLF or HO failure).

At 9 of FIG. 4, the serving node 210/source cell stops transmitting data to and receiving data from the UE 132 and begins forwarding DL data for the UE to the target node 214. The DL data forwarded by source node 210 to the target node 214 may include DL (downlink) data transmitted by the source node 210 to the UE 132 but not acknowledged by the UE, and any newly received DL data (from the core network) that has been received by the source node 210 but not yet transmitted to the UE 132.

At 10, 11 of FIG. 4, data forwarding is performed, including a sequence number status transfer at 10, and a data forwarding at 11. In an example embodiment, the source cell initiates data forwarding immediately after stopping reception and transmission with the UE. Moreover, the source cell sends to the target cell of handover "SN Status Transfer" message defining the next missing PDCP COUNT values for DL and UL, i.e., the next missing packet that the target cell should send in DL or receive in UL.

After that, the UE may perform synchronization with the target node/target cell (e.g., receive PSS and SSS from target node/target cell), and then perform random access with the target node/target cell to establish a connection with the target node/target cell, including sending a RACH (random access) preamble at 12, and receiving a random access (RACH) response at 13. Once the UE has established a connection to the target node/target cell, at 14, the UE 132 sends an RRC reconfiguration complete message/indication to the target node/target cell, and the target node at 15 replies to the serving node/source cell with a handover success indication, and a path switch for the UE traffic is performed at 16 between the core network and the source and target nodes.

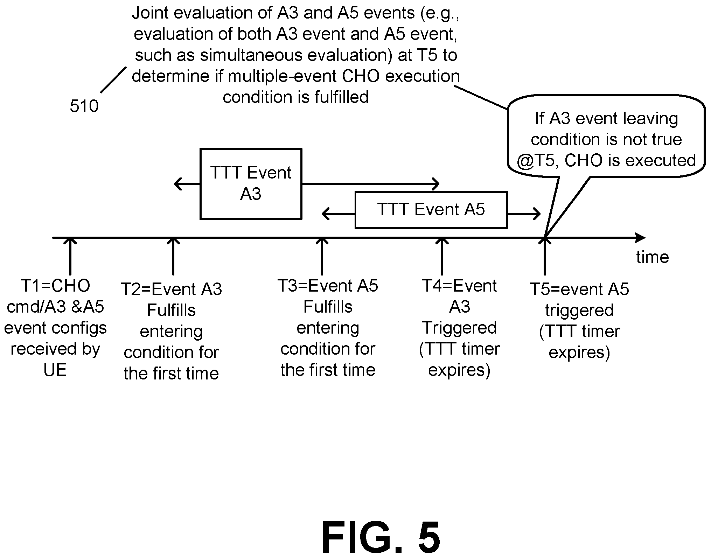

FIG. 5 is a diagram illustrating a dual-event conditional handover (CHO) execution according to an example embodiment. As shown in FIG. 5, two events are provided for a multiple (or dual) event CHO execution, including an A3 event, and an A5 event. At time T1, a CHO (or handover) command is received by the UE, e.g., including a multiple-event CHO configuration, e.g., including a CHO execution condition, and/or event configurations for each of the events. Thus, at T1, event configurations are received by the UE for events A3 and A5, for this example. At time T2, UE determines that event A3 fulfills entering condition for the first time (thus starting TTT timer for event A3). At time T3, event A5 fulfills the entering condition for the event for the first time, thus starting the TTT timer for the A5 event. At time T4, event A3 is triggered (TTT timer for A3 expires). At time T5, the event A5 is triggered (TTT timer for event A5 expires). At time T5 (along with at various possible other times), indicated by 510, the UE may jointly evaluate both events A3 and A5 to determine if the multiple-event CHO execution condition is fulfilled. Thus, at T5, if A3 event leaving condition is not true at T5, CHO execution is performed. Some example information elements (IEs) that may be logged as part of the logging of information related to the multiple-event CHO execution. The times and events shown in FIG. 5 may be useful to explain some of the example IEs that may be logged.

Assume both Event 1 (A3 event) and event 2 (A5 event) are configured to the UE as events for the CHO execution condition and they are to be evaluated simultaneously at one or more points in time, e.g., to determine if the CHO execution condition (based on multiple events) has been fulfilled, thereby trigger CHO execution. A possible timeline of the two events, and their evaluation, is given in FIG. 5. Please note that there can be many combinations (or many different scenarios and/or different occurrences of different event-related conditions for the various events) of the described timeline as it will not be known which event will be triggered first, the time between events being triggered, whether a joint evaluation (e.g., simultaneously) of the two events at one or more points will trigger a CHO execution or not, etc. The timeline shown in FIG. 5 for the dual events is merely one possible timeline, as an illustrative example. The timeline illustrated in FIG. 5 describes a successful CHO or even a best-case scenario for a successful CHO execution. However, in general, there may be a RLF at any point, e.g., such as at any point between T1 and T5.

If something goes wrong (e.g., a failure, such as a RLF or HO failure) between T1 and T5, the UE may typically continue to log the information related to the (attempted) multiple-event CHO execution (e.g., logging event-related conditions for each of the events of the multiple events), and the UE may send a report (e.g., including all or part of the logged information) to the network or serving node, e.g., after reconnection. If there was a RLF, the UE will become temporarily disconnected, and then the UE would connect or reconnect to a cell (by performing random access).

Although not shown in FIG. 5, the CHO preparation has already been performed for the UE, and two events are configured, A3 and A5 (as example), wherein one event is triggered first (A3 event fulfils entering condition), and TTT starts. While the first event (A3) is running, a second event (A5) fulfills its entering condition. The first event (A3) TTT expires for, while the second event (A5) TTT continues running. In this example, a (or an example) joint evaluation point of the two events is at T5 - e.g., after both events have expired (according to this successful CHO execution example). At time T5, at the time the second event has expired in this example, CHO is executed if A3 leaving condition is not true.

Currently UE logging at RLF and MRO (mobility robustness optimization) KPI (key performance indicators) do not assist the network/MRO to identify the root cause of the RLF (or other failure) in case of CHO execution using multiple (e.g., dual) events. As such, the network is presently unable to make correct or accurate decisions for the adjustment of the mobility parameters that will improve performance, particularly in a case of a multiple-event CHO execution.

As noted above, there may be a number of configurable (or variable) mobility related parameters for each event, such as Offset, Hyst (hysteresis value), TTT, etc. If the mobility related parameters of the measurement events are misconfigured, this may cause the UE to fail to perform CHO properly and instead may cause a RLF. Thus, properly configured, or even optimized, mobility parameters for the multiple events for multiple-event CHO execution are desirable for an efficient and correctly performing CHO execution. Mobility robustness optimization (MRO), which aims at reducing the number of connection failures (radio link failures and handover failures) in the network, can react to this problem by adjusting the mobility parameters based on information or reports. The event parameter adjustment(s) may be based on information (e.g., logged information related to a multiple-event CHO execution) that the UE logs and which the UE may report to the network (or to a network node) in e.g., a RLF report, a logged measurement report, or other report. The information of the RLF report may also be added to logged measurement report which is evaluated by the MDT feature.

A variety of information may be logged by a UE, such as information related to multiple-event CHO execution, that may be reported by the UE and later used by the network (e.g., source network node) to adjust one or more parameters to improve performance and/or reliability of CHO execution. Below is a list of some example information elements (IEs) that may be logged/collected by a UE for one or more events of (or related to) a multiple-event CHO execution. This information or IEs, for the multiple events, may be reported by the UE to the network or network node(s), e.g., in a case of a failure, such as a RLF or HO failure, for example, e.g., to assist the network or network node in performing a root cause analysis to determine a root cause of the failure (e.g., RLF or HO failure) and/or assist in improving the CHO execution in the future. The root cause analysis, e.g., performed by the network, such as a network node, based on the logged information/IEs, may, for example, be performed to determine which event(s), of the multiple events, was responsible for the failure, and what possible parameter adjustments should or may be performed to improve performance and/or reliability of CHO execution. Some example IEs that may be logged (and possibly reported by the UE to the network/network node) are described below, as well as some example root cause analysis and possible parameter adjustments that may be performed to possibly improve performance and/or reliability of CHO execution (e.g., parameter adjustments designed to decrease RLF and/or HO failures).

IE (information element) 1: identifying a configuration of Event 1 (A3) & Event 2 (A5 in this example) (the issuing cell may not keep the configuration for a long time and signalled value from network may be scaled on the UE side). Event configuration may indicate one or more of, e.g., an event type (e.g., A3, or A5), a signal parameter to be measured, and associated hysteresis, offsets, and TTT (which could be scaled by UE based on UE speed), or other event-related parameter.

IE 2: Which event (if any) has fulfilled the entering condition for TTT duration, i.e., started TTT and had TTT expired - Event 1, Event 2, both or none. Provides information about both events; for dual event configuration for CHO.

IE 3: Time stamp (or time) when the TTT of the event has expired, e.g., T4/T5 in FIG. 5.

IE 4: Indication if first event (whose TTT has already expired) does not fulfil the leaving condition or not when TTT of the second event expires - evaluation outcome at T5.

IE 5: Event1 and/or Event 2 fulfilled the entering condition and TTT was started.

IE 6: Time stamp (or time) when TTT of an event has started - T2 & T3 in FIG. 5.

IE 7: Time difference between start of first event to fulfill the entering condition TTT and the start of the second event to fulfill the entering condition TTT - (T3-T2) in FIG. 5.

IE 8: Time the two event TTTs were running in parallel - (T4-T3) in FIG. 5

IE 9: Which event fulfilled the entering condition and started TTT first - Event 1 or Event 2, both at same time. In example of FIG. 5, at T2, the first event (A3) fulfils entering condition and started TTT first.

IE 10: Event 1/Event 2 TTT started but was stopped before expiring.

IE 11: Value of TTT of Event 1 /Event 2 when stopped before expiry.

IE 12: Number of time TTT for Event 1/Event 2 was started and stopped before expiring.

Some examples of how this information could then be further used for mobility robustness optimization (MRO) purposes (e.g., which may be based on a combination of information elements) is described in the following. CHO optimization is to increase the number of times CHO is triggered while stability is maintained, e.g., to improve reliability and performance of CHO. Note, FIG. 5 presents a timeline that illustrates a successful CHO execution, where at T5 the UE triggers CHO execution (based on the joint evaluation at T5 of the two events). However, although not shown in FIG. 5, may problems or failures may arise at any time, e.g., a failure such as a RLF HO failure can happen anywhere in that timeline. Thus, if a failure occurs anywhere before T5, then various other event-related conditions (not shown in FIG. 5) may occur and be logged using various IEs. Thus, a variety of other event-related conditions may occur and/or may be logged by the UE that are not shown in FIG. 5, e.g., such as a stopping of a TTT timer before expiry due to a failure or other condition, a second event not being triggered or starting its TTT timer, events not overlapping at all, etc. Thus, many variations may arise that are not shown in FIG. 5, but which the UE may log information via logging of the various IEs for multiple events.

IE 8: T4-T3 is equal to zero (TTTs of the two events are not overlapping) AND the value of aforementioned IE 4 = FALSE (first event to fulfil entering condition and whose TTT has expired is fulfilling the leaving condition when TTT of second event expires). Thus, overall evaluation of the two events took too long, which means that TTT of second event or the offsets controlling its entering condition could (or should) be relaxed so that event 2 fulfills entering condition (and starts TTT) earlier and first event has a better chance of not fulfilling the leaving condition when TTT of second event expires.

IE 10 is True (TTT stopped before expiry) and the value of IE 11 << TTT, which may mean that the configuration of event is too conservative. This is not shown in FIG. 5, but may occur.

The value of IE 2: In another example (not shown in FIG. 5), only TTT of Event 1 has expired. This means that CHO had no chance to be executed. Event 2 configuration should be modified.

The value of IE 2: In another illustrative example (not shown in FIG. 5), none of the events had TTT expiry (TTT did not expire for any of the events). This suggests that both event configurations should be modified.

The value of IE 6 (Timestamp when TTT has started for an event) occurs long after the CHO execution has been provided to the UE at time instant T1. This indicates that configuration of both events can be relaxed.

In addition, failures may be counted, or stored in the logged information related to the multiple-event CHO execution. Thus, it is proposed to count the failures (too late handover) due to not fulfilling the dual- event CHO execution condition above into new subcounters for dual-event CHO execution.

There may be three cases that are described here, depending on whether non-dual threshold measurement events (e.g., A3 events), dual-threshold measurement events (e.g., A5 events), or 1 of each is used as the two events for dual-event CHO execution:

> 1) the following subcounters can be used when event 1 and/or event 2 are not dual-threshold measurement events, e.g., A3:

>> Event 1 is never triggered (TTT of event 1 did not expire):
>> CHO.OutFail.TooLateEvent1NotTriggered failure counter is incremented.
>> Event 2 is never triggered (TTT of event 2 did not expire):

CHO.OutFail.TooLateEvent2NotTriggered failure counter is incremented.

2) If Event 1 and/or 2 are dual-threshold measurement events (e.g. A5), then we can have the following subcounters that are incremented when a failure of a specific type occurs:

Event 1 is never triggered:
Event 1 is never triggered due to Source measurement not being under Threshold 1 (Th1)
CHO.OutFail.TooLateEventlOwnNotCrossed failure counter is incremented.
Event 1 is never triggered due to Target measurement not being never above threshold 2 (Th2)
CHO.OutFail.TooLateEvent1NeighbourNotCrossed failure counter is incremented
Event 2 is never triggered:
Event 2 is never triggered due to Source measurement not being under Thl.
CHO.OutFail.TooLateEvent2OwnNotCrossed failure counter is incremented.
Event 2 is never triggered due to Target measurement not being above Th2.
CHO.OutFail.TooLateEvent2NeighbourNotCrossed failure counter is incremented.

3) For both A3 and A5 events: Event 1 and event 2 are triggered but leaving condition for first triggered event was fulfilled when second event's TTT expired. CHO.OutFail.TooLateEventl2CombinatonNotTriggered failure counter is incremented.

Some examples will be described:

Example 1. A method comprising: logging, by a user device in a wireless network, information related to a multiple-event conditional handover execution, wherein the multiple-event conditional handover execution is based on a joint evaluation of multiple events by the user device; and sending, by the user device, a report including at least a portion of the information.
Example 2. The method of Example 1, wherein the multiple-event conditional handover execution comprises a dual-event conditional handover execution that is based on a joint evaluation of two events.
Example 3. The method of any of Examples 1-2, wherein the sending comprises: sending, by the user device, a report that includes at least a portion of the information, after the user device re-establishes a connection to a cell after a handover failure or radio link failure has occurred for the user device.
Example 4. The method of claim 3, wherein the sending comprises at least one of: sending, by the user device in response to a radio link failure or handover failure, a report that includes at least a portion of the information; or sending, by the user device in response to a request from a network node, a report that includes at least a portion of the information.
Example 5. The method of any of Examples 1-4, wherein the multiple-event conditional handover execution is based on a plurality of events; wherein the logging comprises at least logging of an occurrence of an event-related condition, a number of occurrences of an event-related condition, or a time or timing of an occurrence of an event-related condition for one or more events of the plurality of events.
Example 6. The method of Example 5, wherein an event-related condition comprises at least one of the following: a status of a Time-To-Trigger timer for an event, including a status of either not started, started, stopped after being started, or expired; an event fulfilling an entering condition for the event; an event fulfilling a leaving condition for the event; an occurrence of a handover failure for the user device; or fulfillment, or not, of an execution condition for the multiple-event conditional handover execution.
Example 7. The method of any of Examples 1-6, wherein the multiple-event conditional handover execution is based on a plurality of events; wherein the logging comprises at least one of the following: logging information indicating whether an event related condition has occurred for one or more of the plurality of events; logging information indicating a number of times that an event-related condition has occurred for one or more of the plurality of events; logging a time relationship of, or a time difference between, event-related conditions of at least two events of the plurality of events; logging information indicating a time that an event-related condition has occurred for one or more of the plurality of events; logging information indicating for which event an event-related condition occurred first; or logging a number of failures of handover for the user device due to the plurality of events not fulfilling an execution condition for the multiple-event conditional handover execution.
Example 8. The method of any of examples, wherein the multiple-event conditional handover execution is based on a plurality of events; wherein the logging comprises logging information indicating whether an event-related condition has occurred for one or more of the plurality of events.
Example 9. The method of Example 8, wherein the logging information indicating whether an event-related condition has occurred for one or more of the plurality of events comprises at least one of the following: logging information indicating which event, if any, has fulfilled an entering condition for the event, and started a Time-To-Trigger timer; logging information indicating which event, if any, has fulfilled an entering condition for the event, started a Time-To-Trigger timer, and the Time-To-Trigger timer for the event expired; logging information indicating fulfillment, or not, of an execution condition for the multiple-event conditional handover execution based on a joint evaluation of multiple events by the user device; logging information indicating whether or not a first event, having a Time-To-Trigger timer that has already expired, fulfills a leaving condition for the first event when a Time-To-Trigger timer for the second event expires; or logging information indicating which event, if any, fulfilled an entering condition for the event, started its Time-To-Trigger timer, and the Time-To-Trigger timer for the event was stopped before expiring.

Example 10. The method of any of Examples 1-9, wherein the multiple-event conditional handover execution is based on a plurality of events; wherein the logging comprises logging information indicating a number of times that an event-related condition has occurred for one or more of the plurality of events.

Example 11. The method of Example 10, wherein the logging comprises logging information indicating a number of times that an event-related condition has occurred for one or more of the plurality of events comprises at least: logging information indicating how many times each event, if any, started its Time-To-Trigger timer, and the Time-To-Trigger timer for the event was stopped before expiring.

Example 12. The method of any of Examples 1-7, wherein the multiple-event conditional handover execution is based on a plurality of events including at least a first event and a second event; wherein the logging comprises at least logging of information indicating a relationship of a first event-related condition for the first event with respect to a second event-related condition for the second event.

Example 13. The method of Example 12, wherein the information indicating a relationship comprises at least one of: an order of the first event-related condition for the first event and the second event-related condition of the second event; a time between an occurrence of the first event-related condition for the first event and an occurrence of the second event-related condition of the second event; or a time of an occurrence of the first event-related condition for the first event and a time of an occurrence of the second event-related condition of the second event.

Example 14. The method of any of Examples 12-13, wherein the logging of information indicating a relationship comprises at least one of the following: logging whether a first event or a second event fulfilled an entering condition first; logging values of Time-To-Trigger timers of the first event and the second event when one of the Time-To-Trigger timers was stopped or expired; or logging a time or time period when Time-To-Trigger timers of the first event and the second event were running in parallel.

Example 15. The method of any of Examples 1-7, wherein the multiple-event conditional handover execution is based on a plurality of events; wherein the logging comprises logging information indicating a time that an event-related condition has occurred for one or more of the plurality of events.

Example 16. The method of Example 15, wherein the logging comprises logging information indicating a time that an event-related condition has occurred for one or more of the plurality of events comprises at least one of the following: logging information indicating a time when a Time-To-Trigger timer for an event was started; logging information indicating a time when a Time-To-Trigger timer for an event expired; logging information indicating a time when a Time-To-Trigger timer for an event stopped; or logging information indicating a time when a Time-To-Trigger timer for a first event was running in parallel with a Time-To-Trigger timer for a second event.

Example 17. The method of any of Examples 1-7, wherein the multiple-event conditional handover execution is based on a plurality of events; wherein the logging comprises: logging information indicating for which event an event-related condition occurred first.

Example 18. The method of Example 17, wherein the logging information indicating for which event an event-related condition occurred first comprises at least one of the following: logging information indicating which event, if any, fulfilled an entering condition for the event and started a Time-To-Trigger timer first; logging information indicating which event, if any, had a Time-To-Trigger timer expire first; logging information indicating which event, if any, fulfilled an entering condition for the event, started a Time-To-Trigger timer, and then stopped the Time-To-Trigger timer first.

Example 19. The method of any of Examples 1-18, wherein the multiple-event conditional handover execution is based on a plurality of events, including at least a first event and a second event; wherein the logging comprises logging a failure counter that counts a number of failures of conditional handovers of the user device due to the plurality of events not fulfilling an execution condition for the multiple-event conditional handover execution.

Example 20. The method of Example 19, wherein the logging a failure counter comprises logging one or more of the following information for a case where both the first event and the second event are non-dual-threshold measurement events: a number of conditional handover failures when a Time-To-Trigger timer for the first event did not expire; or a number of conditional handover failures when a Time-To-Trigger timer for the second event did not expire.

Example 21. The method of Example 19, wherein the logging a failure counter comprises logging one or more of the following information for a case where both the first event and the second event are dual-threshold measurement events: a number of conditional handover failures when a Time-To-Trigger timer for the first event did not expire because a source cell measurement was not less than a first threshold; a number of conditional handover failures when a Time-To-Trigger timer for the second event did not expire because a target cell measurement was not greater than a second threshold; a number of conditional handover failures when a Time-To-Trigger timer for the second event did not expire because a source cell measurement was not less than a first threshold; or a number of conditional handover failures when a Time-To-Trigger timer for the first event did not expire because a target cell measurement was not greater than a second threshold.

Example 22. The method of Example 19, wherein the logging a failure counter comprises logging the following information: a number of conditional handover failures based on a Time-To-Trigger timer for the first the first event expired and then the Time-To-Trigger timer for second event expired, but a leaving condition for the first event was fulfilled when the Time-To-Trigger timer for the second event expired.

Example 23. The method of any of Examples 1-22, wherein the multiple-event conditional handover execution is based on a plurality of events, including at least a first event and a second event; wherein the logging comprises at least one of the following: logging of a configuration of a first event and/or a configuration of a second event; logging information indicating which event, if any, has fulfilled an entering condition for the event, and started a Time-To-Trigger timer; logging information indicating which event, if any, has fulfilled an entering condition for the event, started a Time-To-Trigger timer, and the Time-To-Trigger timer for the event expired; logging information indicating fulfillment, or not, of an execution condition for the multiple-event conditional handover execution; logging information indicating whether or not a first event, having a Time-To-Trigger timer that has already expired, fulfills a leaving condition for the first event when a Time-To-Trigger timer for the second event expires; logging information indicating which event, if any, started its Time-To-Trigger timer, and the Time-To-Trigger timer for the event was stopped before expiring; logging information indicating how many times each event, if any, started its Time-To-Trigger timer, and the Time-To-Trigger timer for the event was stopped before expiring; logging whether a first event or a second event fulfilled an entering condition first; logging values of Time-To-Trigger timers of the first event and the second event when one of the Time-To-Trigger timers was stopped or expired; logging a time or time period when Time-To-Trigger timers of the first event and the second event were running in parallel; logging information indicating a time when a Time-To-Trigger timer for an event was started; logging information indicating a time when a Time-To-Trigger timer for an event expired; logging information indicating a time when a Time-To-Trigger timer for an event stopped; logging information indicating a time when a Time-To-Trigger timer for a first event was running in parallel with a Time-To-Trigger timer for a second event; logging information indicating which event, if any, fulfilled an entering condition for the event and started a Time-To-Trigger timer first; logging information indicating which event, if any, had a Time-To-Trigger timer expire first; logging information indicating which event, if any, fulfilled an entering condition for the event, started a Time-To-Trigger timer, and then stopped the Time-To-Trigger timer first; or logging a failure counter that counts a number of failures of conditional handovers of the user device due to the plurality of events not fulfilling an execution condition for the multiple-event conditional handover execution.

Example 24. The method of any of Examples 1-23, further comprising: receiving, by the user device from a network node, a handover command, as part of a conditional handover, including a configuration of each of multiple events, including for at least a configuration of a first event and a configuration for a second event, and a joint evaluation configuration that configures a joint evaluation of the multiple events by the user device to determine whether or not to perform a conditional handover execution.

Example 25. The method of any of Examples 1-24, further comprising: jointly evaluating, by the user device, the plurality of events to determine whether or not to perform a conditional handover execution of the user device from a source network node to a target network node.

Example 26. An apparatus comprising means for performing the method of any of Examples 1-25.

Example 27. A non-transitory computer-readable storage medium comprising instructions stored thereon that, when executed by at least one processor, are configured to cause a computing system to perform the method of any of Examples 1-25.

Example 28. An apparatus comprising: at least one processor; and at least one memory including computer program code; the at least one memory and the computer program code configured to, with the at least one processor, cause the apparatus at least to perform the method of any of Examples 1-25.

Example 29. An apparatus comprising: at least one processor; and at least one memory including computer program code; the at least one memory and the computer program code configured to, with the at least one processor, cause the apparatus at least to: log, by a user device in a wireless network, information related to a multiple-event conditional handover execution, wherein the multiple-event conditional handover execution is based on a joint evaluation of multiple events by the user device; and send, by the user device, a report including at least a portion of the information.

Example 30. A method comprising: sending, by a network node to a user device, a handover command with joint event configuration information including a configuration of multiple events to be jointly evaluated for conditional handover execution by the user device; receiving, by the network node, a report including information logged by the user device related to a failure of a multiple-event conditional handover execution by the user device, wherein the multiple-event conditional handover execution is based on the plurality of events; and modifying, by the network node based on the report, one or more parameters associated with a configuration of one or more events for multiple-event conditional handover execution.

Example 31. The method of Example 30, wherein the joint event configuration information comprises a joint evaluation configuration that configures a joint evaluation of the multiple events by the user device to determine whether or not to perform a conditional handover execution.

Example 32. The method of any of Examples 30-31, wherein the multiple-event conditional handover execution comprises a dual-event conditional handover execution that is based on two events.

Example 33. The method of any of Examples 30-32, wherein the multiple-event conditional handover execution is based on a plurality of events; wherein the information logged by the user device comprises at least one of an occurrence of an event-related condition, a number of occurrences of an event-related condition, or a time or timing of an occurrence of an event-related condition for one or more events of the plurality of events.

Example 34. The method of Example 33, wherein an event-related condition comprises at least one of the following: a status of a Time-To-Trigger timer for an event, including a status of either not started, started, stopped after being started, or expired; an event fulfilling an entering condition for the event; an event fulfilling a leaving condition for the event; an occurrence of a handover failure for the user device; or fulfillment, or not, of an execution condition for the multiple-event conditional handover execution.

Example 35. The method of any of Examples 30-34, wherein the multiple-event conditional handover execution is based on a plurality of events; wherein the information logged by the user device comprises at least one of the following: information indicating whether an event-related condition has occurred for one or more of the plurality of events; information indicating a number of times that an event-related condition has occurred for one or more of the plurality of events; a time relationship of, or a time difference between, event-related conditions of at least two events of the plurality of events; information indicating a time that an event-related condition has occurred for one or more of the plurality of events; information indicating for which event an event-related condition occurred first; or a number of failures of handover for the user device due to the plurality of events not fulfilling an execution condition for the multiple-event conditional handover execution.

Example 36. The method of any of Examples 30-35, wherein the multiple-event conditional handover execution is based on a plurality of events, including at least a first event and a second event; wherein the information logged by the user device comprises at least one of the following: a configuration of a first event and/or a configuration of a second event; information indicating which event, if any, has fulfilled an entering condition for the event, and started a Time-To-Trigger timer; information indicating which event, if any, has fulfilled an entering condition for the event, started a Time-To-Trigger timer, and the Time-To-Trigger timer for the event expired; information indicating fulfillment, or not, of an execution condition for the multiple-event conditional handover execution; information indicating whether or not a first event, having a Time-To-Trigger timer that has already expired, fulfills a leaving condition for the first event when a Time-To-Trigger timer for the second event expires; information indicating which event, if any, started its Time-To-Trigger timer, and the Time-To-Trigger timer for the event was stopped before expiring; information indicating how many times each event, if any, started its Time-To-Trigger timer, and the Time-To-Trigger timer for the event was stopped before expiring; whether a first event or a second event fulfilled an entering condition first; values of Time-To-Trigger timers of the first event and the second event when one of the Time-To-Trigger timers was stopped or expired; a time or time period when Time-To-Trigger timers of the first event and the second event were running in parallel; information indicating a time when a Time-To-Trigger timer for an event was started; information indicating a time when a Time-To-Trigger timer for an event expired; information indicating a time when a Time-To-Trigger timer for an event stopped; information indicating a time when a Time-To-Trigger timer for a first event was running in parallel with a Time-To-Trigger timer for a second event; information indicating which event, if any, fulfilled an entering condition for the event and started a Time-To-Trigger timer first; information indicating which event, if any, had a Time-To-Trigger timer expire first; information indicating which event, if any, fulfilled an entering condition for the event, started a Time-To-Trigger timer, and then stopped the Time-To-Trigger timer first; or a failure counter that counts a number of failures of conditional handovers of the user device due to the plurality of events not fulfilling an execution condition for the multiple-event conditional handover execution.

Example 37. An apparatus comprising means for performing the method of any of Examples 30-36.

Example 38. A non-transitory computer-readable storage medium comprising instructions stored thereon that, when executed by at least one processor, are configured to cause a computing system to perform the method of any of Examples 30-36.

Example 39. An apparatus comprising: at least one processor; and at least one memory including computer program code; the at least one memory and the computer program code configured to, with the at least one processor, cause the apparatus at least to perform the method of any of Examples 30-36.

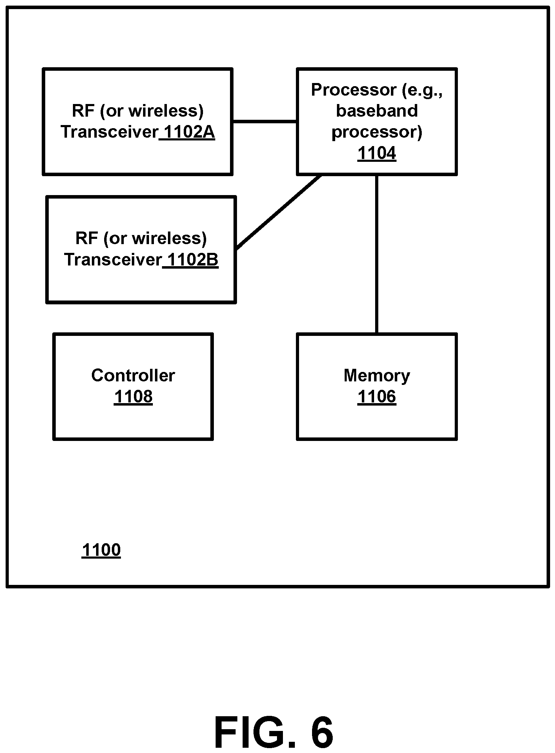

FIG. 6 is a block diagram of a wireless station or node (e.g., AP, BS, gNB, eNB, a relay node or other network node, or a user device/UE, or other node) 1100 according to an example embodiment. The wireless station 1100 may include, for example, one or more (e.g., two as shown in FIG. 6) RF (radio frequency) or wireless transceivers 1102A, 1102B, where each wireless transceiver includes a transmitter to transmit signals and a receiver to receive signals. The wireless station also includes a processor or control unit/entity (controller) 1104 to execute instructions or software and control transmission and receptions of signals, and a memory 1106 to store data and/or instructions.

Processor 1104 may also make decisions or determinations, generate frames, packets or messages for transmission, decode received frames or messages for further processing, and other tasks or functions described herein. Processor 1104, which may be a baseband processor, for example, may generate messages, packets, frames or other signals for transmission via wireless transceiver 1102 (1102A or 1102B). Processor 1104 may control transmission of signals or messages over a wireless network, and may control the reception of signals or messages, etc., via a wireless network (e.g., after being down-converted by wireless transceiver 1102, for example). Processor 1104 may be programmable and capable of executing software or other instructions stored in memory or on other computer media to perform the various tasks and functions described above, such as one or more of the tasks or methods described above. Processor 1104 may be (or may include), for example, hardware, programmable logic, a programmable processor that executes software or firmware, and/or any combination of these. Using other terminology, processor 1104 and transceiver 1102 together may be considered as a wireless transmitter/receiver system, for example.

In addition, referring to FIG. 6, a controller (or processor) 1108 may execute software and instructions, and may provide overall control for the station 1100, and may provide control for other systems not shown in FIG. 6, such as controlling input/output devices (e.g., display, keypad), and/or may execute software for one or more applications that may be provided on wireless station 1100, such as, for example, an email program, audio/video applications, a word processor, a Voice over IP application, or other application or software.

In addition, a storage medium may be provided that includes stored instructions, which when executed by a controller or processor may result in the processor 1104, or other controller or processor, performing one or more of the functions or tasks described above.

According to another example embodiment, RF or wireless transceiver(s) 1102A/1102B may receive signals or data and/or transmit or send signals or data. Processor 1104 (and possibly transceivers 1102A/1102B) may control the RF or wireless transceiver 1102A or 1102B to receive, send, broadcast or transmit signals or data.

The example embodiments are not, however, restricted to the system that is given as an example, but a person skilled in the art may apply the solution to other communication systems. Another example of a suitable communications system is the 5G system. It is assumed that network architecture in 5G will be quite similar to that of the LTE-advanced. 5G is likely to use multiple input - multiple output (MIMO) antennas, many more base stations or nodes than the LTE (a so-called small cell concept), including macro sites operating in co-operation with smaller stations and perhaps also employing a variety of radio technologies for better coverage and enhanced data rates.

It should be appreciated that future networks will most probably utilize network functions virtualization (NFV) which is a network architecture concept that proposes virtualizing network node functions into "building blocks" or entities that may be operationally connected or linked together to provide services. A virtualized network function (VNF) may comprise one or more virtual machines running computer program codes using standard or general type servers instead of customized hardware. Cloud computing or data storage may also be utilized. In radio communications this may mean node operations may be carried out, at least partly, in a server, host or node operationally coupled to a remote radio head. It is also possible that node operations will be distributed among a plurality of servers, nodes or hosts. It should also be understood that the distribution of labor between core network operations and base station operations may differ from that of the LTE or even be non-existent.

Example embodiments of the various techniques described herein may be implemented in digital electronic circuitry, or in computer hardware, firmware, software, or in combinations of them. Example embodiments may be implemented as a computer program product, i.e., a computer program tangibly embodied in an information carrier, e.g., in a machine-readable storage device or in a propagated signal, for execution by, or to control the operation of, a data processing apparatus, e.g., a programmable processor, a computer, or multiple computers. Embodiments may also be provided on a computer readable medium or computer readable storage medium, which may be a non-transitory medium. Embodiments of the various techniques may also include embodiments provided via transitory signals or media, and/or programs and/or software embodiments that are downloadable via the Internet or other network(s), either wired networks and/or wireless networks. In addition, embodiments may be provided via machine type communications (MTC), and also via an Internet of Things (IOT).

The computer program may be in source code form, object code form, or in some intermediate form, and it may be stored in some sort of carrier, distribution medium, or computer readable medium, which may be any entity or device capable of carrying the program. Such carriers include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers.

Furthermore, example embodiments of the various techniques described herein may use a cyber-physical system (CPS) (a system of collaborating computational elements controlling physical entities). CPS may enable the embodiment and exploitation of massive amounts of interconnected ICT devices (sensors, actuators, processors microcontrollers, ...) embedded in physical objects at different locations. Mobile cyber physical systems, in which the physical system in question has inherent mobility, are a subcategory of cyber-physical systems. Examples of mobile physical systems include mobile robotics and electronics transported by humans or animals. The rise in popularity of smartphones has increased interest in the area of mobile cyber-physical systems. Therefore, various embodiments of techniques described herein may be provided via one or more of these technologies.

A computer program, such as the computer program(s) described above, can be written in any form of programming language, including compiled or interpreted languages, and can be deployed in any form, including as a stand-alone program or as a module, component, subroutine, or other unit or part of it suitable for use in a computing environment. A computer program can be deployed to be executed on one computer or on multiple computers at one site or distributed across multiple sites and interconnected by a communication network.

Method steps may be performed by one or more programmable processors executing a computer program or computer program portions to perform functions by operating on input data and generating output. Method steps also may be performed by, and an apparatus may be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer, chip or chipset. Generally, a processor will receive instructions and data from a read-only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory may be supplemented by, or incorporated in, special purpose logic circuitry.

To provide for interaction with a user, embodiments may be implemented on a computer having a display device, e.g., a cathode ray tube (CRT) or liquid crystal display (LCD) monitor, for displaying information to the user and a user interface, such as a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Example embodiments may be implemented in a computing system that includes a back-end component, e.g., as a data server, or that includes a middleware component, e.g., an application server, or that includes a front-end component, e.g., a client computer having a graphical user interface or a Web browser through which a user can interact with an embodiment, or any combination of such back-end, middleware, or front-end components. Components may be interconnected by any form or medium of digital data communication, e.g., a communication network. Examples of communication networks include a local area network (LAN) and a wide area network (WAN), e.g., the Internet.

While certain features of the described embodiments have been illustrated as described herein, many modifications, substitutions and changes will now occur to those skilled in the art.

**Claims**

1. A method comprising:

   logging (210), by a user device (132) in a wireless network (130), information related to a multiple-event conditional handover execution, wherein the multiple-event conditional handover execution is based on a joint evaluation of multiple events by the user device (132); and
   sending (220), by the user device (132), a report including at least a portion of the information, wherein the logging (210) comprises at least logging of an occurrence of an event-related condition, a number of occurrences of an event-related condition, or a time or timing of an occurrence of an event-related condition for one or more events of the plurality of events.

2. The method of claim 1, wherein the multiple-event conditional handover execution comprises a dual-event conditional handover execution that is based on a joint evaluation of two events (510).

3. The method of any of claims 1-2, wherein the sending comprises at least one of:

> sending (220), by the user device, a report that includes at least a portion of the information, after the user device re-establishes a connection to a cell after a handover failure or radio link failure has occurred for the user device;
> sending (220), by the user device in response to a radio link failure or handover failure, a report that includes at least a portion of the information; or
> sending (220), by the user device in response to a request from a network node, a report that includes at least a portion of the information.

4. The method of claim 1, wherein an event-related condition comprises at least one of the following:

> a status of a Time-To-Trigger timer for an event, including a status of either not started, started, stopped after being started, or expired;
> an event fulfilling an entering condition for the event;
> an event fulfilling a leaving condition for the event;
> an occurrence of a handover failure for the user device; or
> fulfillment, or not, of an execution condition for the multiple-event conditional handover execution.

5. The method of any of claims 1-4, wherein the multiple-event conditional handover execution is based on a plurality of events;
wherein the logging (210) comprises at least one of the following:

> logging information indicating whether an event-related condition has occurred for one or more of the plurality of events;
> logging information indicating a number of times that an event-related condition has occurred for one or more of the plurality of events;
> logging a time relationship of, or a time difference between, event-related conditions of at least two events of the plurality of events;
> logging information indicating a time that an event-related condition has occurred for one or more of the plurality of events;
> logging information indicating for which event an event-related condition occurred first; or
> logging a number of failures of handover for the user device due to the plurality of events not fulfilling an execution condition for the multiple-event conditional handover execution.

6. The method of claim 5, wherein the logging information indicating whether an event-related condition has occurred for one or more of the plurality of events comprises at least one of the following:

> logging information indicating which event, if any, has fulfilled an entering condition for the event, and started a Time-To-Trigger timer;
> logging information indicating which event, if any, has fulfilled an entering condition for the event, started a Time-To-Trigger timer, and the Time-To-Trigger timer for the event expired;
> logging information indicating fulfillment, or not, of an execution condition for the multiple-event conditional handover execution based on a joint evaluation of multiple events by the user device;
> logging information indicating whether or not a first event, having a Time-To-Trigger timer that has already expired, fulfills a leaving condition for the first event when a Time-To-Trigger timer for the second event expires; or
> logging information indicating which event, if any, fulfilled an entering condition for the event, started its Time-To-Trigger timer, and the Time-To-Trigger timer for the event was stopped before expiring.

7. The method of any of claims 1-6, wherein the multiple-event conditional handover execution is based on a plurality of events;
wherein the logging (210) comprises logging information indicating a number of times that an event-related condition has occurred for one or more of the plurality of events.

8. The method of claim 7, wherein the logging (210) comprises logging information indicating a number of times that an event-related condition has occurred for one or more of the plurality of events comprises at least:
logging information indicating how many times each event, if any, started its Time-To-Trigger timer, and the Time-To-Trigger timer for the event was stopped before expiring.

9. The method of any of claims 1-5, wherein the multiple-event conditional handover execution is based on a plurality of events including at least a first event and a second event;
wherein the logging (210) comprises at least logging of information indicating a relationship of a first event-related condition for the first event with respect to a second event-related condition for the second event.

10. The method of claim 9, wherein the information indicating a relationship comprises at least one of:

an order of the first event-related condition for the first event and the second event-related condition of the second event;
a time between an occurrence of the first event-related condition for the first event and an occurrence of the second event-related condition of the second event; or
a time of an occurrence of the first event-related condition for the first event and a time of an occurrence of the second event-related condition of the second event.

11. A user device (132) comprising means for performing the method of any of claims 1-10.

12. A non-transitory computer-readable storage medium comprising instructions stored thereon that, when executed by at least one processor of a user device, are configured to cause the user device to perform the method of any of claims 1 to 10.


**Patentansprüche**

1. Verfahren, das Folgendes umfasst:

Protokollieren (210) von Informationen, die sich auf eine Ausführung einer bedingten Übergabe von mehreren Ereignissen beziehen, durch eine Benutzervorrichtung (132) in einem drahtlosen Netzwerk (130), wobei die Ausführung einer bedingten Übergabe von mehreren Ereignissen auf einer gemeinsamen Beurteilung von mehreren Ereignissen durch die Benutzervorrichtung (132) basiert; und
Senden (220) eines Berichts, der mindestens einen Abschnitt der Informationen beinhaltet, durch die Benutzervorrichtung (132), wobei das Protokollieren (210) mindestens das Protokollieren eines Vorkommens einer ereignisbezogenen Bedingung, einer Anzahl von Vorkommen einer ereignisbezogenen Bedingung oder einer Zeit oder eines Timing eines Vorkommens einer ereignisbezogenen Bedingung für eine oder mehrere Ereignisse der Vielzahl von Ereignissen umfasst.

2. Verfahren nach Anspruch 1, wobei die Ausführung einer bedingten Übergabe von mehreren Ereignissen eine Ausführung einer bedingten Übergabe von zwei Ereignissen umfasst, die auf einer gemeinsamen Beurteilung der zwei Ereignisse basiert (510).

3. Verfahren nach einem der Ansprüche 1 bis 2, wobei das Senden mindestens eines von Folgendem umfasst:

Senden (220) eines Berichts durch die Benutzervorrichtung, der mindestens einen Abschnitt der Informationen beinhaltet, nachdem die Benutzervorrichtung eine Verbindung zu einer Zelle neu aufgebaut hat, nachdem ein Übergabefehler oder ein Funkverbindungsfehler für die Benutzervorrichtung aufgetreten ist;
Senden (220) eines Berichts, der mindestens einen Abschnitt der Informationen beinhaltet, durch die Benutzervorrichtung in Reaktion auf einen Funkverbindungsfehler oder einen Übergabefehler; oder
Senden (220) eines Berichts, der mindestens einen Abschnitt der Informationen umfasst, durch die Benutzervorrichtung in Reaktion auf eine Anforderung von einem Netzwerkknoten.

4. Verfahren nach Anspruch 1, wobei eine ereignisbezogene Bedingung mindestens eines von Folgendem umfasst:

einen Status eines Zeit-bis-Auslösung-Timers für ein Ereignis, der einen Status von entweder nicht gestartet, gestartet, angehalten nach gestartet oder abgelaufen beinhaltet;
ein Ereignis, das eine Eintrittsbedingung für das Ereignis erfüllt;
ein Ereignis, das eine Verlassensbedingung für das Ereignis erfüllt;
ein Vorkommen eines Übergabefehlers für die Benutzervorrichtung; oder
Erfüllung einer Ausführungsbedingung für die Ausführung einer bedingten Übergabe von mehreren Ereignissen oder nicht.

5. Verfahren nach einem der Ansprüche 1 bis 4, wobei die Ausführung einer bedingten Übergabe von mehreren Ereignissen auf einer Vielzahl von Ereignissen basiert;
wobei das Protokollieren (210) mindestens eines von Folgendem umfasst:

Protokollieren von Informationen, die anzeigen, ob für ein oder mehrere einer Vielzahl von Ereignissen eine ereignisbezogene Bedingung vorgekommen ist;
Protokollieren von Informationen, die eine Häufigkeit anzeigen, mit der für ein oder mehrere der Vielzahl von Ereignissen eine ereignisbezogene Bedingung vorgekommen ist;
Protokollieren einer Zeitbeziehung von ereignisbezogenen Bedingungen von mindestens zwei Ereignissen der Vielzahl von Ereignissen oder einer Zeitdifferenz zwischen denselben;
Protokollieren von Informationen, die eine Zeit anzeigen, zu der für ein oder mehrere der Vielzahl von Ereignissen eine ereignisbezogene Bedingung vorgekommen ist;
Protokollieren von Informationen, die anzeigen, für welches Ereignis eine ereignisbezogene Bedingung zuerst vorgekommen ist; oder
Protokollieren einer Anzahl von Übergabefehlern für die Benutzervorrichtung, da die Vielzahl von Ereignissen eine Ausführungsbedingung für die Ausführung einer bedingten Übergabe von mehreren Ereignissen nicht erfüllen.

6. Verfahren nach Anspruch 5, wobei das Protokollieren von Informationen, die anzeigen, ob für ein oder mehrere der Vielzahl von Ereignissen eine ereignisbezogene Bedingung vorgekommen ist, mindestens eines von Folgendem umfasst:

Protokollieren von Informationen, die anzeigen, wenn überhaupt, welches Ereignis eine Eintrittsbedingung für das Ereignis erfüllt und einen Zeit-bis-Auslösung-Timer gestartet hat;
Protokollieren von Informationen, die anzeigen, wenn überhaupt, welches Ereignis eine Eintrittsbedingung für das Ereignis erfüllt, einen Zeit-bis-Auslösung-Timer gestartet hat und der Zeit-bis-Auslösung-Timer für das Ereignis abgelaufen ist;
Protokollieren von Informationen, die eine oder keine Erfüllung einer Ausführungsbedingung für die Ausführung einer bedingten Übergabe von mehreren Ereignissen auf Basis einer gemeinsamen Beurteilung der mehreren Ereignisse durch die Benutzervorrichtung anzeigen;
Protokollieren von Informationen, die anzeigen, ob ein erstes Ereignis, das einen Zeit-bis-Auslösung-Timer hat, der bereits abgelaufen ist, eine Verlassensbedingung für das erste Ereignis erfüllt oder nicht, wenn ein Zeit-bis-Auslösung-Timer für das zweite Ereignis abläuft; oder
Protokollieren von Informationen, die anzeigen, wenn überhaupt, welches Ereignis eine Eintrittsbedingung für das Ereignis erfüllt, seinen Zeit-bis-Auslösung-Timer gestartet hat und der Zeit-bis-Auslösung-Timer für das Ereignis angehalten wurde, bevor er abgelaufen ist.

7. Verfahren nach einem der Ansprüche 1 bis 6, wobei die Ausführung einer bedingten Übergabe von mehreren Ereignissen auf einer Vielzahl von Ereignissen basiert;
wobei das Protokollieren (210) das Protokollieren von Informationen umfasst, die eine Häufigkeit anzeigen, mit der für ein oder mehrere der Vielzahl von Ereignissen eine ereignisbezogene Bedingung vorgekommen ist.

8. Verfahren nach Anspruch 7, wobei das Protokollieren (210) das Protokollieren von Informationen umfasst, die eine Häufigkeit anzeigen, mit der für ein oder mehrere der Vielzahl von Ereignissen eine ereignisbezogene Bedingung vorgekommen ist, mindestens Folgendes umfasst:
Protokollieren von Informationen, die anzeigen, wenn überhaupt, wie häufig jedes Ereignis seinen Zeit-bis-Auslösung-Timer gestartet hat und der Zeit-bis-Auslösung-Timer für das Ereignis angehalten wurde, bevor er abgelaufen ist.

9. Verfahren nach einem der Ansprüche 1 bis 5, wobei die Ausführung einer bedingten Übergabe von mehreren Ereignissen auf einer Vielzahl von Ereignissen basiert, die mindestens ein erstes Ereignis und ein zweites Ereignis beinhalten;
wobei das Protokollieren (210) mindestens das Protokollieren von Informationen umfasst, die eine Beziehung einer ersten ereignisbezogenen Bedingung für das erste Ereignis mit Bezug auf eine zweite ereignisbezogene Bedingung für das zweite Ereignis anzeigen.

10. Verfahren nach Anspruch 9, wobei die Informationen, die eine Beziehung anzeigen, mindestens eines von Folgendem umfassen:

einer Reihenfolge der ersten ereignisbezogenen Bedingung für das erste Ereignis und der zweiten ereignisbezogenen Bedingung des zweiten Ereignisses;
einer Zeit zwischen einen Vorkommen der ersten ereignisbezogenen Bedingung für das erste Ereignis und einem Vorkommen der zweiten ereignisbezogenen Bedingung des zweiten Ereignisses; oder
einer Zeit eines Vorkommens der ersten ereignisbezogenen Bedingung für das erste Ereignis und einer Zeit eines Vorkommens der zweiten ereignisbezogenen Bedingung des zweiten Ereignisses.

**11.** Benutzervorrichtung (132), die Mittel zum Durchführen des Verfahrens nach einem der Ansprüche 1 bis 10 umfasst.

**12.** Nichttransitorisches computerlesbares Speichermedium, auf dem Anweisungen gespeichert sind, die, wenn sie von mindestens einem Prozessor einer Benutzervorrichtung ausgeführt werden, dazu ausgelegt sind, die Benutzervorrichtung zu veranlassen, das Verfahren nach einem der Ansprüche 1 bis 10 durchzuführen.

**Revendications**

**1.** Procédé comprenant :

la journalisation (210), par un dispositif utilisateur (132) dans un réseau sans fil (130), d'informations relatives à une exécution de transfert intercellulaire conditionnel à événements multiples, dans lequel l'exécution de transfert intercellulaire conditionnel à événements multiples est basée sur une évaluation conjointe d'événements multiples par le dispositif utilisateur (132) ; et
l'envoi (220), par le dispositif utilisateur (132), d'un rapport comportant au moins une partie des informations, dans lequel la journalisation (210) comprend au moins la journalisation d'une occurrence d'une condition liée à un événement, d'un nombre d'occurrences d'une condition liée à un événement, ou d'un temps ou d'un moment d'une occurrence d'une condition liée à un événement pour un ou plusieurs événements de la pluralité d'événements.

**2.** Procédé selon la revendication 1, dans lequel l'exécution de transfert intercellulaire conditionnel à événements multiples comprend une exécution de transfert intercellulaire conditionnel à deux événements qui est basée sur une évaluation conjointe de deux événements (510).

**3.** Procédé de l'une des revendications 1 et 2, dans lequel l'envoi comprend au moins un parmi :

l'envoi (220), par le dispositif utilisateur, d'un rapport qui comporte au moins une partie des informations, après que le dispositif utilisateur a rétabli une connexion à une cellule après qu'un échec de transfert intercellulaire ou qu'un échec de liaison radio s'est produit pour le dispositif utilisateur ;
en réponse à un échec de liaison radio ou à un échec de transfert intercellulaire, l'envoi (220), par le dispositif utilisateur, d'un rapport qui comporte au moins une partie des informations ; ou
en réponse à une demande d'un nœud de réseau, l'envoi (220), par le dispositif utilisateur, d'un rapport qui comporte au moins une partie des informations.

**4.** Procédé selon la revendication 1, dans lequel une condition liée à un événement comprend au moins l'un des éléments suivants :

un statut d'un temporisateur temps/déclenchement pour un événement comportant un statut non démarré, démarré, arrêté après avoir été démarré, ou expiré ;
un événement respectant une condition d'entrée pour l'événement ;
un événement respectant une condition de sortie pour l'événement ;
une occurrence d'un échec de transfert intercellulaire pour le dispositif utilisateur ; ou
le respect ou non d'une condition d'exécution pour l'exécution de transfert intercellulaire conditionnel à événements multiples.

**5.** Procédé de l'une des revendications 1 à 4, dans lequel l'exécution de transfert intercellulaire conditionnel à événements multiples est basée sur une pluralité d'événements ;
dans lequel la journalisation (210) comprend au moins l'un des éléments suivants :

des informations de journalisation indiquant si une condition liée à un événement s'est produite pour un ou plusieurs de la pluralité d'événements ;

des informations de journalisation indiquant un nombre de fois qu'une condition liée à un événement s'est produite pour un ou plusieurs de la pluralité d'événements ;

la journalisation d'une relation temporelle de conditions liées à un événement d'au moins deux événements de la pluralité d'événements, ou d'une différence temporelle entre des conditions liées à un événement d'au moins deux événements de la pluralité d'événements ;

des informations de journalisation indiquant un temps où une condition liée à un événement s'est produite pour un ou plusieurs de la pluralité d'événements ;

des informations de journalisation indiquant pour quel événement une condition liée à un événement s'est produite en premier ; ou

la journalisation d'un nombre d'échecs de transfert intercellulaire pour le dispositif utilisateur en raison de la pluralité d'événements ne respectant pas une condition d'exécution pour l'exécution de transfert intercellulaire conditionnel à événements multiples.

6. Procédé selon la revendication 5, dans lequel les informations de journalisation indiquant si une condition liée à un événement s'est produite pour un ou plusieurs de la pluralité d'événements comprennent au moins l'un des éléments suivants :

des informations de journalisation indiquant, le cas échéant, quel événement a respecté une condition d'entrée pour l'événement et a démarré un temporisateur temps/déclenchement ;

des informations de journalisation indiquant, le cas échéant, quel événement a respecté une condition d'entrée pour l'événement et a démarré un temporisateur temps/déclenchement et le temporisateur temps/déclenchement pour l'événement expiré ;

des informations de journalisation indiquant le respect ou non d'une condition d'exécution pour l'exécution de transfert intercellulaire conditionnel à événements multiples sur la base d'une évaluation conjointe d'événements multiples par le dispositif utilisateur ;

des informations de journalisation indiquant si un premier événement, dont un temporisateur temps/déclenchement a déjà expiré, respecte ou non une condition de sortie pour le premier événement lorsqu'un temporisateur temps/déclenchement pour le deuxième événement expire ; ou

des informations de journalisation indiquant, le cas échéant, quel événement a respecté une condition d'entrée pour l'événement, a démarré son temporisateur temps/déclenchement et que le temporisateur temps/déclenchement pour l'événement a été arrêté avant d'expirer.

7. Procédé de l'une des revendications 1 à 6, dans lequel l'exécution de transfert intercellulaire conditionnel à événements multiples est basée sur une pluralité d'événements ;

dans lequel la journalisation (210) comprend des informations de journalisation indiquant un nombre de fois qu'une condition liée à un événement s'est produite pour un ou plusieurs de la pluralité d'événements.

8. Procédé selon la revendication 7, dans lequel la journalisation (210) comprend des informations de journalisation indiquant un nombre de fois qu'une condition liée à un événement s'est produite pour un ou plusieurs de la pluralité d'événements comprenant au moins :

des informations de journalisation indiquant, le cas échéant, combien de fois chaque événement a démarré son temporisateur temps/déclenchement, et que le temporisateur temps/déclenchement pour l'événement a été arrêté avant d'expirer.

9. Procédé de l'une des revendications 1 à 5, dans lequel l'exécution de transfert intercellulaire conditionnel à événements multiples est basée sur une pluralité d'événements comportant au moins un premier événement et un deuxième événement ;

dans lequel la journalisation (210) comprend au moins la journalisation d'informations indiquant une relation d'une première condition liée à un événement pour le premier événement par rapport à une deuxième condition liée à un événement pour le deuxième événement.

10. Procédé selon la revendication 9, dans lequel les informations indiquant une relation comprennent au moins un parmi :

un ordre de la première condition liée à un événement pour le premier événement et de la deuxième condition liée à un événement du deuxième événement ;

un temps entre une occurrence de la première condition liée à un événement pour le premier événement et une occurrence de la deuxième condition liée à un événement du deuxième événement ; ou
un temps d'une occurrence de la première condition liée à un événement pour le premier événement et un temps d'une occurrence de la deuxième condition liée à un événement du deuxième événement.

11. Dispositif utilisateur (132) comprenant des moyens pour réaliser le procédé de l'une des revendications 1 à 10.

12. Support de stockage non transitoire lisible par ordinateur comprenant des instructions qui y sont stockées et qui, lorsqu'elles sont exécutées par au moins un processeur d'un dispositif utilisateur, sont configurées pour amener le dispositif utilisateur à réaliser le procédé de l'une des revendications 1 à 10.

Example Wireless Network 130

FIG. 1

Logging, by a user device in a wireless network, information related to a multiple-event conditional handover execution, wherein the multiple-event conditional handover execution is based on a joint evaluation of multiple events by the user device

210

Sending, by the user device, a report including at least a portion of the information

220

# FIG. 2

Sending, by a network node to a user device, a handover command with joint event configuration information including a configuration of multiple events to be jointly evaluated for conditional handover execution by the user device

310

Receiving, by the network node, a report including information logged by the user device related to a failure of a multiple-event conditional handover execution by the user device, wherein the multiple-event conditional handover execution is based on the plurality of events

320

Modifying, by the network node based on the report, one or more parameters associated with a configuration of one or more events for multiple-event conditional handover execution

330

# FIG. 3

EP 4 150 960 B1

FIG. 4

27

**FIG. 5**

| RF (or wireless) Transceiver 1102A | Processor (e.g., baseband processor) 1104 |
| RF (or wireless) Transceiver 1102B | |
| Controller 1108 | Memory 1106 |

1100

# FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200045602 A

**Non-patent literature cited in the description**

- On CHO execution triggering with two joint events. *3GPP TSG-RAN WG2 Meeting #109e*